# EUROPEAN PATENT APPLICATION

(11) **EP 4 462 224 A1**
(43) Date of publication of application: **13.11.2024**
(21) Application number: 23173257.9
(22) Date of filing: 12.05.2023
(51) Int. Cl.: G06F 1/16, G06F 3/042, G06F 3/01, G06F 3/03

(54) **PORTABLE COMPUTER WITH VIRTUALIZED HUMAN-MACHINE INTERFACE**

(71) Applicant: AMERIA AG, 69124 Heidelberg (DE)
(72) Inventor: Metter, Albrecht, 69120 Heidelberg (DE)
(74) Representative: Best, Bastian

(57) **Abstract**

Disclosed is a portable computer (100) with a virtualized human-machine interface as well as a corresponding control method and computer program. The portable computer (100) may comprise a base housing (102) without a physical computer keyboard and comprising a touchscreen (106) arranged on a user-facing surface of the base housing (102), a top cover (104) flexibly coupled to the base housing (102) and comprising a display (108) arranged on a user-facing surface of the top cover (104), and a touchless gesture input system. The disclosed portable computer (100) provides a platform for enhancing the way how users interact with computers both within existing and future use cases.

## Description

### TECHNICAL FIELD

The present disclosure generally relates to the field of computing devices, and more particularly to a portable computer with a virtualized human-machine interface, more particularly a virtualized human-machine interface which combines touchless gesture input capabilities with a touchscreen instead of a physical computer keyboard.

### BACKGROUND

Computing devices have become an essential part of our daily lives. One type of computing device includes portable computers also known as laptops or notebooks which provide the user with a convenient way to work, communicate, and entertain themselves on the go. Portable computers typically include a display and keyboard that are directly connected to the main case, all sharing a single power source.

Despite evolutionary developments of their design (e.g., form factor, materials) and technical features (e.g., battery life, performance), portable computers have remained essentially the same over a long time. For example, the human-machine interface of typical portable computers, which consists mainly of a keyboard and a pointing device such as a trackpad or trackpoint, have remained practically unchanged for decades. As a result, the ways how users interact with portable computers have remained relatively static, and so are the use cases in which these devices are employed nowadays.

One reason why the ways to interact with a traditional portable computer have remained essentially static is because these devices and interaction mechanisms are primarily based on the available hardware. Typical portable computers follow a one-size-fits-all approach, making every application, every use case, and the ways to interact essentially the same and limited to the limits that the hardware allows. The keyboard stays a keyboard, the trackpad stays a trackpad, and the buttons remain buttons. This leads to the interaction being comfortable only in a limited number of use cases. At the same time, the interaction is not particularly ergonomic, often more time-consuming than it would need to be, and in many cases not as precise as it could be.

As a result, traditional portable computers are not fully future-ready for many current mega trends and emerging use cases such as, without limitation, 3D content creation and consumption, virtual reality, the Metaverse, speech-to-text, artificial intelligence, chat bots, and gaming.

One significant limitation of traditional human-machine interfaces in portable computers is their two-dimensional nature. They cannot fully support the 3D interfaces required for virtual and augmented reality applications. This limitation makes it difficult for users to interact with these types of applications, reducing their usefulness. Additionally, with the advent of the Metaverse, which is a virtual universe where people can interact in a shared space, the limitations of traditional human-machine interfaces become even more apparent.

Another limitation of traditional portable computer interfaces is their reliance on physical input devices like the keyboard and trackpad, which have several drawbacks. For example, in terms of ergonomics, using a laptop keyboard and trackpad for extended periods of time can lead to discomfort, strain, and even injury, such as carpal tunnel syndrome. Secondly, physical laptop keyboards have a fixed layout which results in limited functionality. Thirdly, physical input devices like keyboards and trackpads can be affected by environmental factors such as temperature, humidity, and dust, which can affect their responsiveness, accuracy, and visual appearance. Lastly, the learning curve may be significant, as some users may find it challenging to learn how to use physical input devices like a trackpad or trackpoint efficiently, especially if they are not familiar with using laptops.

To address some of these limitations, efforts have been taken to virtualize some components of the computer, such as the keyboard. One example is mentioned in the international patent application WO 2018/183519 A1, which describes an embodiment of a computing device having a virtual keyboard. The virtual keyboard may include one or more displays that produce images of buttons, keys, or other affordances that can be selected by the user. Force sensors or touch sensors are used in conjunction with the virtual keyboard to detect selections of the affordances that are displayed on the virtual keyboard.

However, these approaches still limit computers to the old paradigm of thinking about personal computing like using a typewriter where the computer is a tool that the user interacts with primarily by typing text, in addition to moving a mouse pointer. They fall short of providing new user interface paradigms that are ready for future use cases.

It is therefore an objective of the present disclosure to provide a portable computer with a new user interface paradigm that is ready for future use cases, thereby overcoming the above-mentioned disadvantages of the prior art at least in part. By doing so, the present disclosure aims to enable users to interact with their computers in more natural and intuitive ways by providing a more seamless and immersive computing experience, thereby unlocking the full potential of new and emerging technologies.

### SUMMARY OF THE DISCLOSURE

The objective is solved by the subject-matter defined in the independent claims. Advantageous modifications of embodiments of the present disclosure are defined in the dependent claims as well as in the description and the figures.

As a general overview, certain aspects of the present disclosure provide a virtualized human-machine interface which allows for radically enhancing the way how users interact with computers both within existing and future use cases. For example, for work-related use cases, the aspects disclosed herein help to optimize the interaction with typical office applications (e.g., Microsoft Word, PowerPoint, Excel, Adobe Acrobat, etc.), to optimize working in different situations and scenarios (e.g., in the office, on the move, in the train, in a cafe) and to optimize the interaction in various postures or positions (e.g., when a laptop is placed on a desk, on a small table in the train, on the lap, etc.). For leisure-related use cases, the aspects disclosed herein help to optimize for a particularly easy, convenient, and intuitive use for all sorts of leisure applications at home or on the go (e.g., streaming content, surfing the Internet, etc.), as well as providing a revolutionary user experience in gaming use cases. In addition to enhancing existing use cases, however, the virtualized human-machine interface according to aspects of the present disclosure can unlock its true potential when it is used to provide completely new use cases and/or user interface (UI) and/or user experience (UX) concepts. On the one hand, touchless gesture input capabilities as disclosed herein free the computer from being limited to the classical use cases which more or less follow a typewriter-like input paradigm. Truly three-dimensional control made possible by touchless gesture inputs enable a direct, natural, intuitive and immersive interaction with three-dimensional content, especially (but not only) when combined with three-dimensional display capabilities such as spatial displays. This way, the new class of computer, in particular portable computer, provided by aspects of the present disclosure has the potential to become the new standard not only for work-, leisure- and gaming-related applications but can also replace current augmented reality (AR) / virtual reality (VR) concepts.

One aspect of the present disclosure relates to a portable computer. The portable computer may comprise a base housing, in particular a base housing without a physical computer keyboard. The base housing may comprise a touchscreen. The touchscreen may be arranged on a user-facing surface of the base housing. The portable computer may comprise a top cover. The top cover may be flexibly coupled to the base housing. The top cover may comprise a display. The display may be arranged on a user-facing surface of the top cover. The portable computer may comprise a touchless gesture input system.

This way, an entirely new class of portable computer is provided which relies on a largely virtualized human-machine interface. The virtualization allows to adapt to how the computer is used, where it is used, providing a platform for practically any user-specific way to interact with practically any application, as will be explained in more detail after individual components, features and characteristics of the portable computer have been described in the following.

Generally speaking, a portable computer may also be referred to as a laptop computer, a notebook computer, or in short as a laptop or a notebook. A portable computer is to be understood as a computer designed to be relatively easily moved from one place to another, as opposed to stationary computers designed to remain at a single location such as desktops, workstations and server racks. A portable computer is typically a portable personal computer (PC), while touchscreen-based handheld devices such as tablets, phablets and smartphones are called mobile devices instead. The portable computer may be configured to run on a desktop operating system such as Microsoft Windows, macOS or Linux, unlike mobile devices which typically run on mobile operating systems such as Android or iOS.

The base housing should be understood as that part of the portable computer which is normally placed on a surface while in use, such as a tabletop or a user's lap. The portable computer may comprise various hardware components, such as central processing unit (CPU), random access memory (RAM), storage medium (e.g., hard drive), graphics card, sound card, motherboard and/or battery power source, most of which may be arranged in the base housing.

The top cover should be understood as that part of the portable computer which holds the display and at the same time serves as a cover or lid when the portable computer is closed. The top cover may comprise a webcam which may be arranged on the user-facing surface of the top cover. The top cover may also comprise a secondary webcam which may be arranged on the outside of the top cover. The display in the top cover may also be referred to as a primary display which provides a primary means of conveying visual information to the user, such as by displaying graphical user interfaces. The display may be an electronic visual display, also referred to as a screen, in particular a flat-panel screen. The display may be an electroluminescent (EL) display, a liquid crystal display (LCD), a light-emitting diode (LED) display, such as an organic light-emitting diode (OLED) display or active-matrix organic light-emitting diode (AMOLED) display, a plasma (P) display, a quantum dot (QD) display, a microLED display, a retina display, an e-ink display or any other suitable display or display stack. The display may comprise a display cover (e.g., a glass, sapphire, or plastic protective cover) and/or other suitable components. The display may have a size which is conventional for portable computers, such as a diagonal size of at least 10, 11, 12, 13, 14, 15, 16 or 17 inch. The base housing may have essentially the same size as the top cover. A projection system is another example of a display or display means which uses light to project an image onto a projection surface such as a screen or wall. A display configured to display three-dimensional content, such as a spatial reality display and/or a holographic display, is another example of a display, as will be described in more detail further below.

The flexible coupling between the base housing and the top cover may be provided by a rotatable, pivotable, spinnable and/or hinged coupling, giving the portable computer its characteristic form factor. The portable computer may be a clamshell-type computer allowing it to be used in the traditional laptop mode or it may be a convertible computer allowing for additional usage modes such as a tablet mode, stand mode or tent mode. The flexible coupling may be detachable, allowing for at least temporally detaching the top cover from the base housing. The portable computer may be closed or folded shut by a user by rotating the top cover towards the base housing so that the inside of the top cover faces the inside of the base housing. The user may open the portable computer such that the inside of the top cover and the inside of the base housing both face the user. Accordingly, the term "user-facing surface" should be understood as the respective surface facing the user when the portable computer is open.

According to one aspect of the present disclosure, the base housing is a housing without a physical computer keyboard. In other words, the base housing, and preferably the entire portable computer, may not comprise a physical computer keyboard. A computer keyboard should be understood as an input device typically modeled after the typewriter keyboard which is configured to allow a user to provide alphanumeric input. In other words, a computer keyboard is typically used as a text entry interface for typing characters (e.g., letters, numbers, punctuation marks) and/or symbols into application software. A computer keyboard typically comprises an arrangement of buttons or keys associated with a set of characters or symbols, and each press of a key typically corresponds to a single written character or symbol, while some characters or symbols may require pressing and holding several keys simultaneously or in sequence. While most keys may produce characters or symbols, other keys (such as the escape key or arrow keys) may prompt the computer to execute system commands. In a physical computer keyboard, the buttons or keys may be physical buttons or keys comprising mechanical levers, electronic switches, or the like, and may have a set of characters, symbols, or other affordances, engraved or printed on them. This way, by omitting a physical computer keyboard according to the above-explained aspect of the present disclosure, the portable computer is effectively freed from the conventional typewriter metaphor and made susceptible to a plethora of new use cases, including but not limited anymore to text entry, some of which will be explained in more detail throughout the present disclosure.

According to another aspect of the present disclosure, the base housing comprises a touchscreen. A touchscreen should be understood as assembly of both an input device, such as a touch panel, and an output device, such as a display like an electronic visual display as already described further above. The touch panel may be layered on top of the display. A user may give input and/or control the portable computer through simple or multi-touch gestures by touching the screen with one or more fingers and/or an input device such as a stylus. This way, by providing a touchscreen, in particular as a replacement for a physical computer keyboard, the user can interact with the portable computer in a more flexible way thanks to the flexibility in displaying content, control elements and/or other affordances on the touchscreen. In particular, this allows completely new use cases beyond mere text input, as will be explained in more detail throughout the present disclosure.

According to another aspect of the present disclosure, the portable computer may comprise a touchless gesture input system. A touchless gesture input system should be understood as any system which allows a user to interact with the computer using gestures, such as hand movements, without requiring the user to touch the computer for this interaction. The touchless gesture input system may comprise sensing means (e.g., comprising one or more sensor arrangements and/or one or more sensor devices, as will be explained in more detail further below). The sensing means may be configured to observe at least part of an interaction space and/or to capture movements in an (the) interaction space. The touchless gesture input system may comprise processing means (e.g., comprising software, firmware and/or hardware). The processing means may be configured to detect or determine free-handed, in-air or any other types of gestures performed by the user, or even multiple users, e.g., based on interpreting the captured movements. The processing means may be configured to generate one or more control commands for controlling the portable computer or one or more functions thereof, for causing display of information on the display and/or touchscreen, and/or any other type of relevant function. This way, an even greater degree of virtualization of the human-machine interface is obtained. An interaction space should be understood as comprising or being a 3D space in the nearfield of the portable computer in which the user may provide touchless user input. The limitations of buttons, trackpad, computer mice, and the like, as hardware-based input devices as well as the limitations of touchscreens providing a purely two-dimensional plane are effectively overcome. Instead, the virtualization of the human-machine interface using touchless gesture interaction improves the flexibility of interacting with the computer in more than one way. First of all, the interaction space is not bound to a physical object anymore, and thereby enables a flexible use adapted to the specific user, allows to adapt the way to interact to specific, and in particular completely new, use cases. This is particularly true when the interaction space is a three-dimensional interaction space, as will be explained in more detail throughout the present disclosure.

According to another aspect of the present disclosure, the base housing of the portable computer is a housing without a physical pointing device. In other words, the base housing, and preferably the entire portable computer, may not comprise a physical pointing device. A pointing device should be understood as an input device which is configured to allow a user to move a pointer and/or cursor displayed on the display of the computer device. Movements of the pointing device are typically echoed on the display by movements of the pointer and/or cursor, and/or other visual changes. Typical examples of physical pointing devices include a computer mouse, trackpad, touchpad, trackpoint, joystick, stylus, a computer's main display in the form of a touchscreen, or the like. This way, another degree of virtualization of the human-machine interface is obtained, freeing the portable computer from the limitations of traditional physical input devices even more. According to one aspect, one or more, in particular all, functions normally provided by a physical pointing device may be provided by the above-mentioned touchscreen arranged in the base housing, the above-mentioned touchless gesture input system, or the combination of both, as will be explained in more detail throughout the present disclosure.

According to another aspect of the present disclosure, the user-facing surface of the base housing does not comprise any physical buttons. In this case, a physical power button may still be provided, e.g., on a sidewall of the base housing and/or in the top cover, but the user-facing surface of the base housing is kept essentially free of physical input elements. According to another aspect of the present disclosure, the user-facing surface of the base housing does not comprise any physical buttons except for a power button and/or a mouse button assembly. The mouse button assembly may comprise a first button such as a left click button. The mouse button assembly may comprise a second button such as a right click button. The mouse button assembly may comprise a third button such as a scroll button. According to another aspect of the present disclosure, the user-facing surface of the base housing does not comprise any physical buttons except for a power button and/or a mouse button assembly and/or a function button assembly. The function button assembly may comprise one or more function buttons or keys. This way, depending on the number of physical buttons or keys provided on the user-facing surface of the base housing, still further degrees of virtualizations of the human-machine interface of the portable computer are obtained.

According to another aspect of the present disclosure, the touchscreen is arranged in at least a keyboard region of the user-facing surface of the base housing. A keyboard region should be understood as a region of the user-facing surface of the base housing of a portable computer where a physical computer keyboard would normally be expected. The keyboard region may be arranged in an upper portion of the user-facing surface of the base housing when viewed from above. This way, the user can provide touch inputs in an ergonomic and intuitive way since the touchscreen is arranged in an area which is easily and comfortably reachable and where the user would expect a conventional input means such as a physical computer keyboard. The touchscreen may cover the keyboard region or may extend beyond the keyboard region.

According to another aspect of the present disclosure, the touchscreen is arranged above (as seen from above) a palmrest region of the user-facing surface of the base housing. A palmrest region should be understood as a region of the user-facing surface of the base housing of a portable computer where a user conventionally places the palm or palms when interacting with the keyboard region. This way, the user can provide touch inputs on the touchscreen in an ergonomic manner, namely with one or more fingers while the palm can comfortably rest on the palmrest. The ratio between a height of the touchscreen and a height of the palmrest (as viewed from above) may be essentially 1:1, but other ratios may be provided, such as without limitation essentially 1:2, 1:3, 1:4, 1:5, 1:6, 1:7, 1:8, 1:9, 9:1, 8:1, 7:1, 6:1, 5:1, 4:1, 3:1 or 2:1.

According to another aspect of the present disclosure, the touchscreen covers essentially the entire width of the user-facing surface of the base housing. Essentially means in this context that the touchscreen may cover the entire width of the user-facing surface or at least a predominant portion of the width of the user-facing surface, leaving room next to the touchscreen for a left and/or right lateral rim region on the user-facing surface of the base housing. Such a left and/or right lateral rim region may optionally comprise one or more components of the portable computer such as a power button, a function button assembly, a keypad such as a numeric keypad, a fan, speakers, or the like.

According to another aspect of the present disclosure, the touchscreen covers essentially an upper half (as seen from above) of the user-facing surface of the base housing. Essentially means in this context that an upper edge of the touchscreen may extend completely towards an upper edge of the user-facing surface of the base housing (as viewed from above) or may leave room above the touchscreen (as viewed from above) for an upper rim region on the user-facing surface of the base housing. Such an upper rim region may optionally comprise one or more components of the portable computer such as a power button, a function button assembly, a fan, an input device such as a touchbar, speakers, or the like. Essentially also means in this context that a lower edge of the touchscreen (as viewed from above) can, but does not have to, coincide with an imaginary horizontal centerline of the user-facing surface of the base housing.

According to another aspect of the present disclosure, the touchscreen has a size suitable for displaying at least a virtual computer keyboard. A virtual computer keyboard should be understood as a computer keyboard as described further above but which comprises an arrangement of virtual buttons or keys in the form of user-selectable affordances displayed on the touchscreen. The virtual computer keyboard may comprise a conventional computer keyboard layout or a conventional laptop keyboard layout. The virtual computer keyboard may comprise at least a typewriter keyboard layout. The virtual computer keyboard may comprise a keyboard layout in accordance with a standardized layout specification such as ISO (e.g., ISO/IEC 9995-2), ANSI (e.g., ANSI-INCITS 154-1988) and/or JIS (e.g., JIS X 6002-1980). At least the virtual keys associated with letters may have a key center spacing compliant with ISO 9241-410:2012-12, in particular essentially 19 mm.

According to another aspect of the present disclosure, the touchscreen is configured to display a virtual control panel. The virtual control panel may comprise one or more, in particular a plurality of, user-selectable affordances associated with touchless gesture input. This way, the touch and touchless input methods disclosed herein may be advantageously combined into an ergonomic and intuitive user interface. The user may perform touchless input gestures while performing touch inputs in conjunction, enabling radically new input methods, as will be explained in more detail in the present disclosure.

According to another aspect of the present disclosure, the virtual control panel is arranged at or near a left edge or a right edge of the touchscreen. This way, the control panel can be ergonomically and efficiently reached by the user with one or more first fingers while the user performs touchless input gestures with one or more second fingers. Furthermore, the user can ergonomically and efficiently switch between a touchscreen usage posture, such as a typing posture, and one or more touchless gesture input postures, such as one or more postures in which a pointer on the display can be operated. This allows for using the portable computer efficiently, e.g., in the scenario disclosed in European patent application no. 23165745.3 titled "IMPROVED TOUCHLESS POINTER OPERATION DURING TYPING ACTIVITIES USING A COMPUTER DEVICE", the contents of which are incorporated herein by reference.

According to another aspect of the present disclosure, the plurality of user-selectable affordances associated with touchless gesture input comprises one or more of a touchless gesture input mode indication button, a left click button, a right click button and/or a scroll button. The touchless gesture input mode indication button may serve for switching between one or more touchless gesture input modes and one or more other modes, such as a touchscreen usage mode. Such switching may, e.g., be performed in accordance with the concepts disclosed in European patent application no. 23165746.1 titled "MODE SWITCHING BETWEEN TOUCHLESS POINTER OPERATION AND TYPING ACTIVITIES USING A COMPUTER DEVICE", the contents of which are incorporated herein by reference.

According to another aspect of the present disclosure, the virtual control panel comprises an outermost row, which may be reachable by a middle finger of a user, and/or an inner row, which may be reachable by an index finger of the user. The touchless gesture input mode indication button may be arranged in the outermost row. The left click button may be arranged in the inner row, in particular at the top of the inner row. The right click button may be arranged in the inner row, in particular at the bottom of the inner row. The scroll button may be arranged in the inner row, in particular between the left click button and the right click button. This way, a particularly ergonomic arrangement of the virtual touch panel is provided.

It should be understood that all or at least part of the elements and functions of the virtual control panel described herein may alternatively be provided by a physical control panel. Such a physical control panel may comprise one or more, in particular a plurality of, user-selectable affordances in the form of physical buttons, keys, input elements, or the like, associated with touchless gesture input. Also a combined control panel or an arrangement of control panels with virtual and/or physical elements may be provided. Also, the general concept of the control panel (be it virtual, physical, or a combination thereof) may be provided in combination with any other type of data processing apparatus other than a portable computer. Therefore, according to another aspect of the present disclosure, a data processing apparatus, in particular a computing device, more particularly a personal computer, or any of the types of devices disclosed herein, may be provided which comprises at least a control panel, the control panel being configured to comprise some or all of the corresponding aspects disclosed herein.

According to another aspect of the present disclosure, the display of the top cover is a touch-insensitive display. In other words, it is not a touchscreen but a passive display. This results in a cost-efficient setup. At the same time, touch inputs are less relevant because of the touchless gesture input capabilities of the portable computer. Alternatively, the display of the top cover may comprise or be a touchscreen, so that the user may still decide to use touch inputs on the (main display) touchscreen.

According to another aspect of the present disclosure, the display is a display configured to display three-dimensional content also referred to as 3D display. A 3D display should be understood as any display capable of conveying depth to the viewer. One example of a 3D display is a stereoscopic display which produces a basic 3D effect by means of stereopsis. However, stereoscopic displays can cause eye strain and visual fatigue. Other examples of a 3D display are a light field display and a holographic display, which typically produce a more realistic 3D effect by combining stereopsis and accurate focal length for the displayed content. These types of 3D displays may cause less visual fatigue than classical stereoscopic displays. As non-limiting examples, holographic displays as provided by the companies Looking Glass Factory Inc. (called Looking Glass), Leia Inc. or Sony Corporation (called Sony Spatial Realty Display) could be used. This way, three-dimensional content can be viewed by the user, which may create a particularly immersive user experience when combined with three-dimensional touchless gesture control, as will be explained in more detail below.

According to another aspect of the present disclosure, the portable computer, in particular the touchless gesture input system, in particular the processing means thereof (see further above), is configured to enter or activate one of a plurality of touchless gesture input modes. The entering of one of the plurality of touchless gesture input modes may be based at least in part on a position of at least one hand of the user relative to the portable computer. This way, a suitable touchless gesture input mode can be selected automatically depending on where the at least one hand of the user is currently located. Different exemplary hand locations will become apparent from the following discussion of exemplary modes.

The plurality of touchless gesture input modes may include a first mode in which at least part of a hand of the user, in particular at least one finger, is resting on the touchscreen, such as in a typing posture. In this mode, the user may use one or more fingers of the hand to perform a touchless gesture input, for example by moving the one or more fingers, in particular the index finger, to cause a manipulation of a pointer displayed on the display. This mode allows for a particularly efficient switching between touchscreen inputs and touchless gesture inputs, e.g., while typing on a virtual keyboard or otherwise manipulating controls displayed on the touchscreen.

The plurality of touchless gesture input modes may include a second mode in which at least a part of a hand of the user, in particular a palm or portion thereof, is resting on a palmrest region (such as the palmrest region described elsewhere in the present disclosure) of the user-facing surface of the base housing. In this mode, the user's hand may not touch the touchscreen. In this mode, the user may use one or more fingers of the hand to perform a touchless gesture input, for example by moving the one or more fingers, in particular the index finger, to cause a manipulation of a pointer displayed on the display. At the same time, the palm of the user's hand may rest on the palmrest region, e.g., on a right-sided part thereof when the user's hand is the right hand, which may enable a particularly ergonomic way of touchless gesture input.

The plurality of touchless gesture input modes may include a third mode in which at least a part of a hand of the user, in particular the entire hand, is arranged next to the portable computer. In this mode, the hand may be resting on a surface such as a tabletop on which the portable laptop is located. In this mode, the user may perform touchless gestures to emulate manipulation of a physical input device, such as a computer mouse, as e.g., disclosed in European patent application no. 23165743.8 titled "EMULATION OF A PHYSICAL INPUT DEVICE FOR TOUCHLESS CONTROL OF A COMPUTER DEVICE", the contents of which are incorporated herein by reference.

The plurality of touchless gesture input modes may include a fourth mode in which a hand of the user is arranged near the display of the top cover without touching the portable computer. In this mode, the user may perform touchless gestures while the user's hand is in the air, i.e., not in contact with any portion of the portable computer. This may include pointing gestures to control a pointer displayed on the display, gestures for manipulating 3D objects displayed on the display, or the like.

The plurality of touchless gesture input modes may include a fifth mode in which at least part of a hand of the user, in particular at least one finger, is resting on a palmrest region (such as the palmrest region described elsewhere in the present disclosure) of the user-facing surface of the base housing. In this mode, the user may touch the palmrest with the finger and move the finger to emulate use of a physical input device such as a trackpad, even when the palmrest region does not comprise a physical trackpad. Instead, the movement of the finger may be observed with the touchless gesture input system, i.e., the sensing means thereof, to cause a manipulation of a pointer displayed on the display.

It should be understood that the numbering of the above-described modes (first, second, third, fourth, fifth) is made simply for identifying such modes in the present disclosure but is not meant to imply any sequence, nor a certain sub-combination or minimum or maximum number of modes.

Regardless of the specific selection or combination of supported touchless gesture input modes, the above aspects allow for a particularly advantageous adaptivity of the touchless gesture input capabilities to the user's current need. Depending on the particular touchless gesture input mode entered or activated, different modules or components of the processing means of the touchless gesture input system, such as dedicated software modules, may be activated to interpret the gestures performed by the user. As one example, a vector space for observing the touchless gesture input may be calibrated and/or adapted to the position of the at least one hand of the user relative to the portable computer.

According to another aspect of the present disclosure, the entering of one of the plurality of touchless gesture input modes may be based at least in part on a user-activation of a control element, in particular a touchless gesture input mode indication button, more particularly the touchless gesture input mode indication button of the control panel described elsewhere in the present disclosure.

In one configuration, when the touchless gesture input mode indication button is activated by the user, the portable computer will automatically select the touchless gesture input mode that will be activated depending on the position of at least one hand of the user at the time of activation of the button. The mode may remain active until the user releases the touchless gesture input mode indication button. Upon releasing the touchless gesture input mode indication button, the portable computer may enter a mode in which no touchless gesture inputs are detected. In another configuration, when the touchless gesture input mode indication button is activated by the user, the user may use another input element, such as a (virtual) button, to cycle through the available touchless gesture input modes. One of the touchless gesture input modes may then be activated in response to the user releasing the touchless gesture input mode indication button, or by using yet another input element. In yet another configuration, the user may cycle through the plurality of touchless gesture input modes by repeatedly touching or pressing the touchless gesture input mode indication button.

According to another aspect of the present disclosure, the touchless gesture input system may be configured for observing and processing touchless gesture inputs performed by more than one user. For example, a second person may stand next to the actual user of the portable computer and may also perform touchless gesture inputs, e.g., out of an angled or elevated position with respect to the portable computer.

According to another aspect of the present disclosure, the touchless gesture input system is configured to determine touchless gesture inputs, in particular a plurality of different touchless gesture inputs or types of touchless gesture inputs, performed by a user in an interaction space. The interaction space may be a three-dimensional interaction space. The touchless gesture inputs may be determined based at least in part on one or more of: one or more fingers of the user, one or both hands of the user, or one or more input objects held by the user. This way, utilizing the 3D space and all three dimensions, the way users interact with their portable computers can be truly revolutionized. The touchless gesture control, in particular in the three-dimensional interaction space, provides an intuitive and natural interaction. The three-dimensional interaction space is not bound to a physical object such a trackpad anymore and thus enables a direct and intuitive interaction with the portable computer. The interaction space may have different shapes, dimensions, directions and/or spatial extensions depending on the use case and/or hardware characteristics. For example, the interaction space may be arranged essentially above the user-facing surface of the base housing of the portable computer, or a part thereof, or may instead or in addition cover other areas, such as without limitation proximal to the portable computer (i.e., between the computer and the user) and/or next to one or two sides of the portable computer. From a technical perspective, the interaction space may be larger than the space actually used or needed to determine touchless gesture inputs, i.e., the touchless gesture input system may observe a 3D space that is larger than the space which is eventually used for the touchless gesture determination.

According to another aspect of the present disclosure, touchless gesture inputs may be further determined based at least in part on one or more touch inputs on the touchscreen. In other words, this aspect allows to advantageously combine, or accompany, touchless gesture inputs (via the touchless gesture input system, as explained above) with touch inputs on the touchscreen of the base housing, which leads to a radically new user interface concept and enables various new ways of interacting with the computer, as will be explained in more detail throughout the present disclosure.

According to another aspect of the present disclosure, the determined touchless gesture inputs comprise a pointing gesture, wherein determining the pointing gesture causes a manipulation of a pointer displayed on the display. The touchless gesture control, in particular in the three-dimensional interaction space, enables a direct user interaction with the pointer by simply pointing towards the display, leading to a particularly intuitive, natural and immersive user experience.

According to another aspect of the present disclosure, the determined touchless gesture inputs comprise one or more gestures such as two-dimensional and/or three-dimensional gestures. A two-dimensional gesture should be understood to include any gesture that could theoretically also be performed on a touchscreen, i.e., essentially in a two-dimensional plane. A three-dimensional gesture should be understood as a gesture that involves all three spatial dimensions at least to some extent. Some examples of such gestures are illustrated in the figures and described further below, but it should be understood that the concepts disclosed herein may be used in conjunction with virtually any type of specific gesture depending on the requirements and use case at hand.

According to another aspect of the present disclosure, the determined touchless gesture inputs comprise one or more user-defined gestures. This way, the user may customize certain gestures, may assemble user-defined gestures from a library of gesture components, and/or may even define completely unique personal gestures.

It should be understood that the aspects relating to touchless gesture input in general, and in particular relating to the touchless input gestures described above and elsewhere in the present disclosure, are not strictly bound to the portable computer but may be provided in any data processing apparatus. Therefore, according to another aspect of the present disclosure, a data processing apparatus, in particular a computing device, more particularly a personal computer, or any of the types of devices disclosed herein, may be provided which comprises at least a touchless gesture input system, the touchless gesture input system being configured to comprise some or all of the corresponding aspects disclosed herein.

According to another aspect of the present disclosure, the touchscreen is configured to display a plurality of touchscreen layouts. This way, the human-machine interface of the portable computer can flexibly adapt to the task at hand. Introducing a touchscreen instead of a physical computer keyboard enables this flexibility to an extent unheard of before.

The plurality of touchscreen layouts may comprise one or more of:
- A keyboard layout. The keyboard layout may comprise a virtual computer keyboard for inputting text into an application displayed on the display. Possible characteristics of a virtual computer keyboard have already been described above. Since the computer keyboard is virtual, a great degree of flexibility is provided. For example, the keyboard layout may switch between different languages, e.g., based on a user-preference.
- One or more application-specific layouts. The one or more application-specific layouts may comprise user-selectable affordances associated an application, in particular with content of the application, displayed on the display. The application may include, without limitation, one of a word processing application, a spreadsheet application, a presentation application, a gaming application, an educational application, a web browser application, a video viewer application, a video and/or audio editing application, a programming environment application, a musical instrument application, a device control application for controlling a technical device such as an industrial machine, a robot, a vehicle, or a medical device. This way, application-specific input controls may be presented in an application-specific layout on the touchscreen, such as controls normally found on a game controller, as one example. Furthermore, the application-specific layout may also present content associated with the corresponding application displayed on the main display, which advantageously interconnects the touchscreen and its associated touch input capabilities with the main display and its associated touchless gesture input capabilities. Examples sill be provided further below in the detailed description.
- One or more user-defined layouts. This way, the user may freely customize the layout(s) displayed on the touchscreen, giving users the highest degree of customization and intelligent interaction.
- A blank layout. This way, the touchscreen can stay blank and unresponsive when it is not needed, such as in a children's educational game which relies solely on touchless gesture input.

According to another aspect of the present disclosure, the portable computer is configured to cause displaying a selected one of the plurality of touchscreen layouts based at least in part on a user selection. This way, the user can flexibly adapt the human-machine interface of the portable computer to the user's individual needs. The displaying of a selected one of the plurality of touchscreen layouts may also be caused based at least in part on a predicted user intent, and may be thus performed automatically, semi-automatically, or after the user has confirmed a recommendation for a particular layout provided by the computer.

It should be understood that the aspects relating to a touchscreen and touchscreen layouts in general, and in particular relating to the touchscreen and touchscreen layouts described above and elsewhere in the present disclosure, are not strictly bound to the portable computer but may be provided in any data processing apparatus. Therefore, according to another aspect of the present disclosure, a data processing apparatus, in particular a computing device, more particularly a personal computer, or any of the types of devices disclosed herein, may be provided which comprises at least a touchscreen, the touchscreen being configured to comprise some or all of the corresponding aspects disclosed herein.

According to another aspect of the present disclosure, the portable computer comprises a voice input system. The voice input system may comprise an audio input device such as a microphone and/or audio input processing means, which may be implemented in software. The audio input means may be configured for converting spoken language into text.

According to another aspect of the present disclosure, the touchless gesture input system comprises sensing means configured to observe at least part of an interaction space, in particular at least part of the (three-dimensional) interaction space mentioned above. The sensing means may in principle comprise any sensor technology. In one particular aspect of the present disclosure, the sensing means comprises at least a first and a second sensor arrangement. The first and the second sensor arrangements may be respectively arranged at or near opposing upper corners of the top cover. One possible specific implementation will be described in more detail in the detailed description below. Further exemplary sensor arrangements are disclosed in European patent application no. 23165748.7 titled "SENSOR ARRANGEMENT FOR TOUCHLESS CONTROL OF A COMPUTER DEVICE, SENSOR SYSTEM AND ELECTRONIC DEVICE" and European patent application no. 23165755.2 titled "", the contents of which are incorporated herein by reference. Techniques for providing a touchless input interface using multiple sensor devices are disclosed in EP 4 083 757 A1 titled "TOUCHLESS INPUT INTERFACE FOR AN ELECTRONIC DISPLAY USING MULTIPLE SENSORS", the contents of which are incorporated herein by reference.

According to another aspect of the present disclosure, a method of controlling the portable computer, or more generally any data processing apparatus disclosed herein, according to any one of the aspects disclosed herein is provided.

The method may comprise a step of receiving at least one user input. The at least one user input may include at least one touch input on the touchscreen, at least one touchless gesture input captured by the touchless gesture input system, or both.

The method may comprise a step of interpreting the at least one received user input to identify at least one function to be performed.

The method may comprise a step of generating at least one control command. The step of generating at least one control command may be performed in response to and/or based at least in part on the at least one received user input and/or the at least one function to be performed. The at least one control command may comprise at least one control command to control a function of the portable computer, at least one control command to cause manipulation of content displayed on the touchscreen, at least one control command to cause manipulation of content displayed on the display, or any combinations thereof.

The method may comprise one or more steps to perform any other functions disclosed herein with respect to the portable computer.

According to another aspect of the present disclosure, a computer program is provided. The computer program may comprise instructions which, preferably when the program is executed by the portable computer according to any one of the aspects disclosed herein, cause the portable computer to carry out any one of the methods disclosed herein, or parts thereof. The computer program may be provided as software and/or firmware executable on the portable computer. The computer program may be provided as a distinct product, e.g., for download from a server, app store, or the like or on a non-transitory storage medium. The computer program may be provided as part of the portable computer, i.e., it may be (pre)installed on the portable computer. The computer program may execute at least some of the functions remotely with respect to the portable computer, such as on a computing device connected to the portable computer via a wired or wireless network connection.

The portable computers, methods and/or computer programs may comprise and/or provide an application programming interface (API). The API may be configured for allowing an external application and/or device to use the computer program, such as by invoking an executing of one or more functions and/or by receiving responses. Examples of an external application include without limitation an operating system or an application executing on the portable computer. Examples of an external device include without limitation a sensor device and/or a component of the portable computer such as the touchscreen, touchless gesture input system, or the like.

While a portable computer has been described, aspects of the present disclosure which have been described above and which will be further exemplified below may be provided in alternative devices, including without limitation any type of data processing apparatus, electronic device, computing device, personal computer (PC), stationary computer (e.g., workstation, desktop, server rack), special-purpose device (e.g., gaming console, set-top-box), handheld device, mobile device (e.g., tablet, phablet, smartphone) or electronic device embedded in a technical device or system (e.g., car, machine). This applies to individual aspects disclosed herein as well as to particular combinations of the aspects disclosed herein.

One example of an alternative device is a computing device. The computing device may be a touchscreen-based handheld device such as a tablet, phablet, smartphone, or the like. As another example, the computing device may at least have a form factor similar to the mentioned touchscreen-based handheld devices but may comprise a palmrest region similar to the one disclosed elsewhere herein. In the latter example, the computing device may essentially resemble the base housing of the portable computer disclosed herein, but without being physically connected to a display. The computing device may comprise a housing which may have one or more characteristics of the base housing disclosed elsewhere herein. In particular, the housing may be a housing without a physical computer keyboard and comprising a touchscreen, which touchscreen may be arranged on a user-facing surface of the housing. The computing device may comprise a display interface configured to connect to an external display. A display interface should be understood as any type of wired and/or wireless interface configured to couple the computing device to an external display such that the computing device can cause displaying information on the external display. The external display may have one or more characteristics of the display disclosed elsewhere herein. The computing device may comprise a touchless gesture input system, or at least part thereof, which may have one or more characteristics of the touchless gesture input system disclosed elsewhere herein. In particular, the computing device may comprise at least the processing means of the touchless gesture input system. The sensing means of the touchless gesture input system, or at least part thereof, may be arranged external to the computing device, such as integrated into the external display, and the computing device may comprise an interface configured to couple to the external sensing means or part thereof. Alternatively, the sensing means of the touchless gesture input system, or part thereof, may be integrated into the computing device.

Another example of an alternative device is a computing device. The computing device may serve as a peripheral device for a primary computing device such as a personal computer (PC). A peripheral device should be understood as any auxiliary hardware device used to transfer information into and out of an external computing device, i.e., the primary computing device. The peripheral computing device may have a form factor similar to a touchscreen-based handheld device and may optionally comprise a palmrest region similar to the one disclosed elsewhere herein. The peripheral computing device may comprise a housing which may have one or more characteristics of the base housing disclosed elsewhere herein. In particular, the housing may be a housing without a physical computer keyboard and comprising a touchscreen, which touchscreen may be arranged on a user-facing surface of the housing. The peripheral computing device may comprise an interface configured to connect to the primary computing device. The primary computing device may comprise or be connectable to a display. The mentioned interface should be understood as any type of wired and/or wireless interface configured to couple the peripheral computing device to the primary computing device such that the peripheral computing device can cause displaying information on the display associated with the primary computing device. The display may have one or more characteristics of the display disclosed elsewhere herein. The peripheral computing device may comprise a touchless gesture input system, or at least part thereof, which may have one or more characteristics of the touchless gesture input system disclosed elsewhere herein. In particular, the peripheral computing device may comprise at least the processing means of the touchless gesture input system, or part thereof. In addition or alternatively, the processing means of the touchless gesture input system, or part thereof, may be provided in the primary computing device. The sensing means of the touchless gesture input system, or at least part thereof, may be arranged external to the peripheral computing device, such as integrated into the primary computing device or associated display, and the peripheral computing device may comprise an interface configured to couple to the external sensing means or part thereof. Alternatively, the sensing means of the touchless gesture input system, or part thereof, may be integrated into the peripheral computing device.

### BRIEF DESCRIPTION OF THE DRAWINGS

The disclosure may be better understood by reference to the following drawings:
- Fig. 1:: A perspective view of a portable computer in accordance with embodiments of the present disclosure.
- Fig. 2:: A top view of a portable computer in accordance with embodiments of the present disclosure.
- Fig. 3:: A virtual control panel in accordance with embodiments of the present disclosure.
- Fig. 4:: A three-dimensional interaction space in accordance with embodiments of the present disclosure.
- Fig. 5:: An example of touchless gesture control with a free-hand gesture in accordance with embodiments of the present disclosure.
- Fig. 6:: An example of touchless gesture control with a free-hand gesture in combination with touch inputs, e.g., on a virtual control panel in accordance with embodiments of the present disclosure.
- Fig. 7:: An example of touchless gesture control while typing in accordance with embodiments of the present disclosure.
- Fig. 8:: An example of touchless gesture control with a 3D gesture in accordance with embodiments of the present disclosure.
- Fig. 9:: Examples of user-definable touchless input gestures in accordance with embodiments of the present disclosure.
- Fig. 10:: An example of a keyboard layout with a virtual computer keyboard in accordance with embodiments of the present disclosure.
- Fig. 11:: An example of a keyboard layout with a virtual emoji keyboard in accordance with embodiments of the present disclosure.
- Fig. 12:: An example of an application-specific layout for an educational application in accordance with embodiments of the present disclosure.
- Fig. 13:: An example of an application-specific layout for a gaming application in accordance with embodiments of the present disclosure.
- Fig. 14:: An example of an application-specific layout for a business application in accordance with embodiments of the present disclosure.
- Fig. 15:: An example use of the computer for creating a slide presentation using a presentation application in accordance with embodiments of the present disclosure.
- Fig. 16:: An example use of the computer for browsing Internet content in accordance with embodiments of the present disclosure.
- Fig. 17:: An example use of the computer for consuming video content in accordance with embodiments of the present disclosure.
- Fig. 18:: Another example use of the computer for consuming video content in accordance with embodiments of the present disclosure.
- Fig. 19:: An example use of the computer for producing text in a word processing application in accordance with embodiments of the present disclosure.
- Fig. 20:: An example use of the computer for controlling a video conference application and for sharing a slide presentation in accordance with embodiments of the present disclosure.
- Fig. 21:: An example use of the computer for controlling a gaming application in accordance with embodiments of the present disclosure.
- Fig. 22:: An example use of the computer for controlling a 3D graphics application in accordance with embodiments of the present disclosure.
- Fig. 23:: An example use of the computer for controlling a video and/or audio application in accordance with embodiments of the present disclosure.
- Fig. 24:: An example use of the computer with a user-customized touchscreen layout and a virtual touchpad in accordance with embodiments of the present disclosure.
- Fig. 25:: An exemplary mapping of input types onto input modalities according to an embodiment of the present disclosure.
- Fig. 26:: An exemplary hardware configuration of a sensing means of a touchless gesture input system according to an embodiment of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

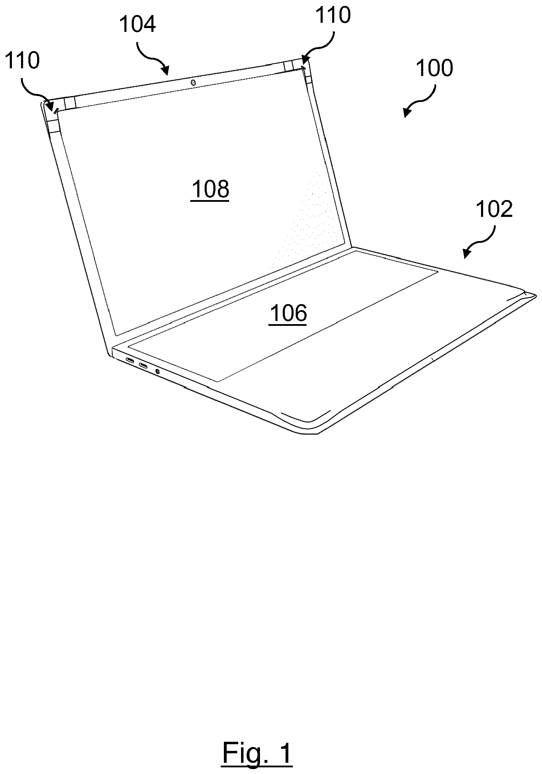

Fig. 1 illustrates a perspective view of a portable computer 100 in accordance with embodiments of the present disclosure. The portable computer 100 comprises a base housing 102 and a top cover 104. The portable computer 100 is open, thereby revealing respective user-facing surfaces of the base housing 102 and top cover 104. A display 108 is arranged on the user-facing surface of the top cover 104. A touchscreen 106 is arranged on the user-facing surface of the base housing 102. The portable computer 110 comprises a touchless gesture input system 110, which comprises in the illustrated embodiment first and second sensor devices which are arranged at or near opposing upper corners of the top cover 104. However, the touchless gesture input system 110 may comprise other sensor arrangements.

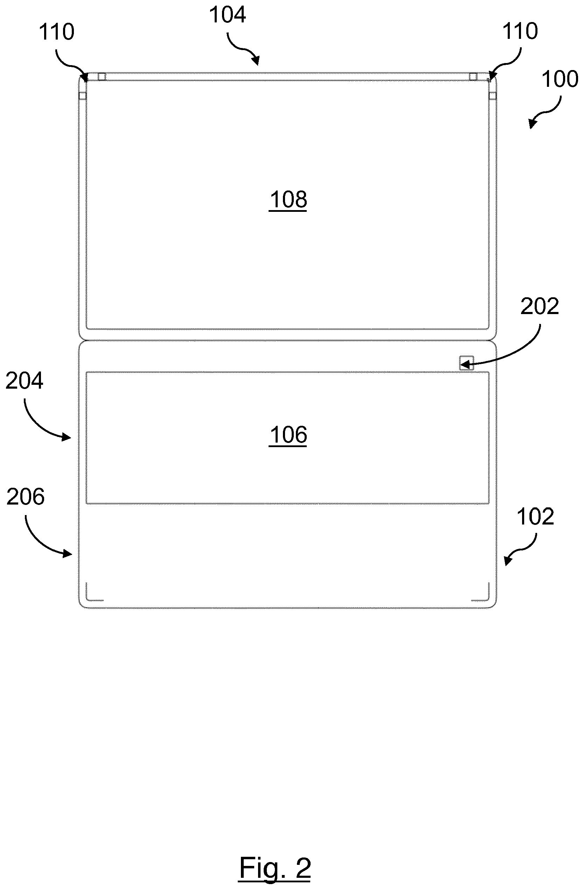

Fig. 2 illustrates a top view of a portable computer 100 in accordance with embodiments of the present disclosure. In addition to the components described with reference to Fig. 1, Fig. 2 shows a keyboard region 204 of the base housing 102, in which the touchscreen 106 is arranged, and a palmrest region 206 of the base housing 102. The embodiment of the portable computer 100 illustrated in Fig. 2 also comprises a power button 202 arranged on the user-facing surface of the base housing 102. However, the power button 202 may be omitted from the user-facing surface of the base housing 102 (as illustrated in Fig. 1) and, if needed, may be arranged elsewhere on the portable computer 100.

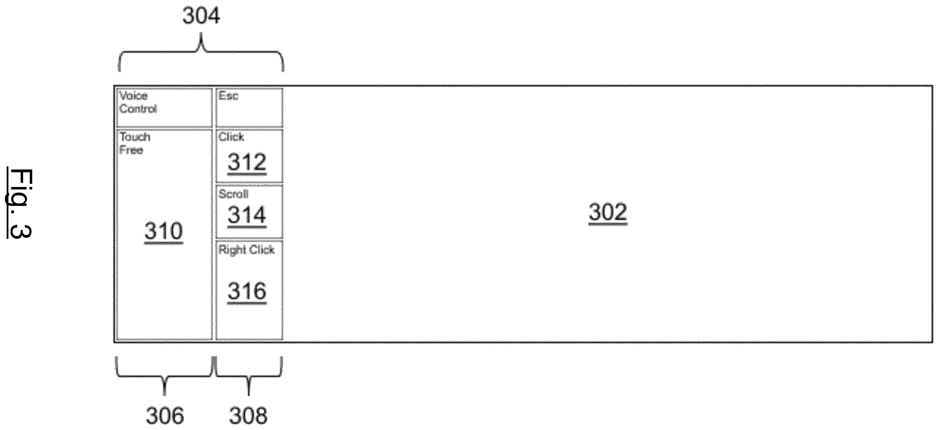

Fig. 3 illustrates a control panel 304, which is in the illustrated embodiment a virtual control panel 304 displayable on the touchscreen 106 in accordance with embodiments of the present disclosure. In the illustrated embodiment, the control panel 304 is arranged at the left edge of the touchscreen 106 and to the left of a main area 302 of the touchscreen 106. This allows the user to provide touch inputs on the control panel 304 with the left hand while the user may perform touchless input gestures with the right hand. Alternatively, the control panel 304 may be arranged at the right edge of the touchscreen 106 which may be more convenient for users who prefer to perform touchless input gestures with the left hand. In yet another alternative configuration, the control panel 304 may be arranged in other places on the touchscreen 304, e.g., between two halves of a virtual keyboard. The placement of the control panel 304 may be configurable by the user.

The control panel 304 comprises a plurality of user-selectable affordances associated with touchless gesture input. One of the affordances is a touchless gesture input mode indication button 310. Using this button 310, the user may activate a touchless gesture input mode in which touchless input gestures, such as gestures performed with the user's right hand, may be tracked. The touchless gesture input mode may be active as long as the button 310 is activated, i.e., touched. In the illustrated embodiment, the button 310 is arranged in an outermost row 306 of the control panel 304 so that it can be ergonomically reached by a middle finger of the user. This is a particular ergonomic setup because the user's index finger can reach the other affordances arranged on the inner row 308 of the control panel 304, namely a left click button 312, a right click button 316 and a scroll button.

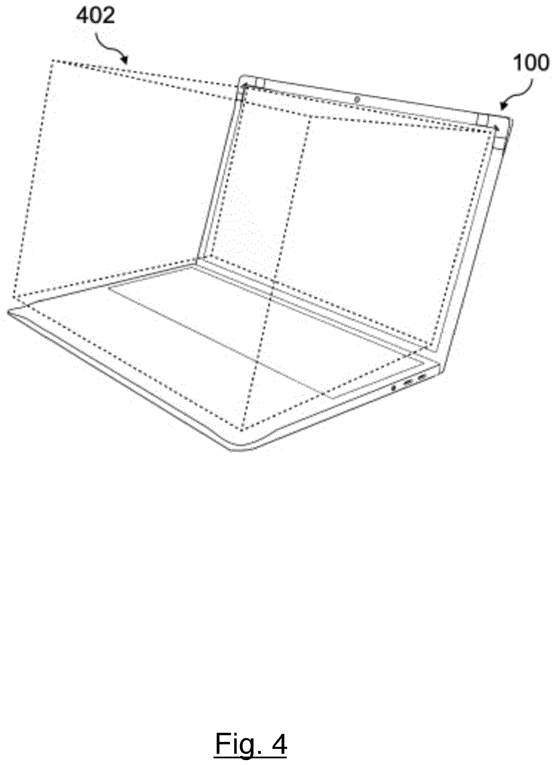

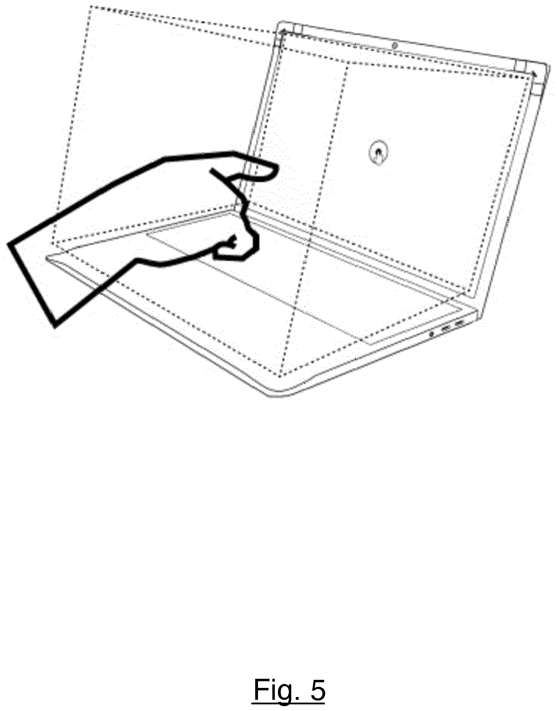

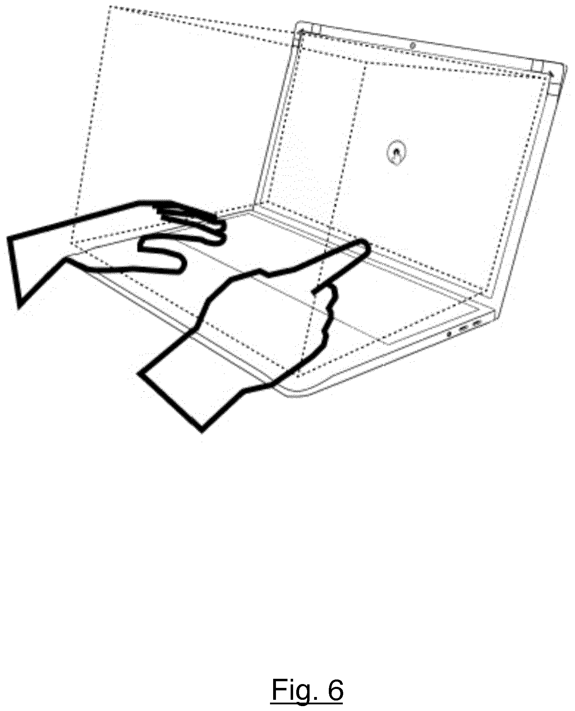

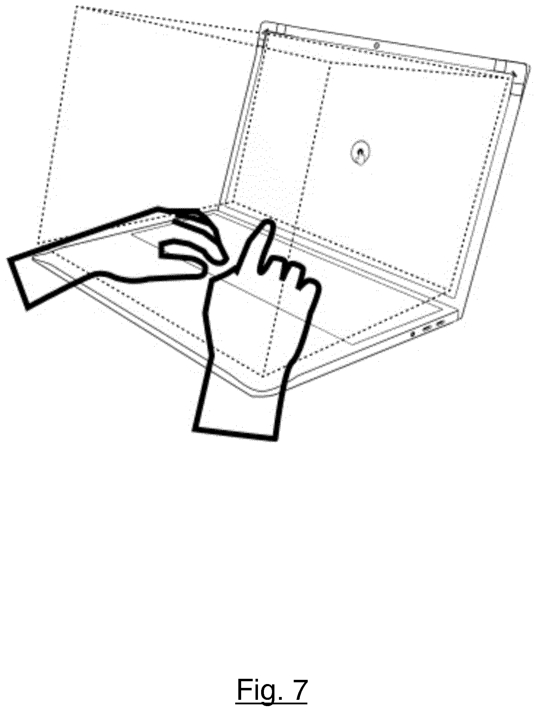

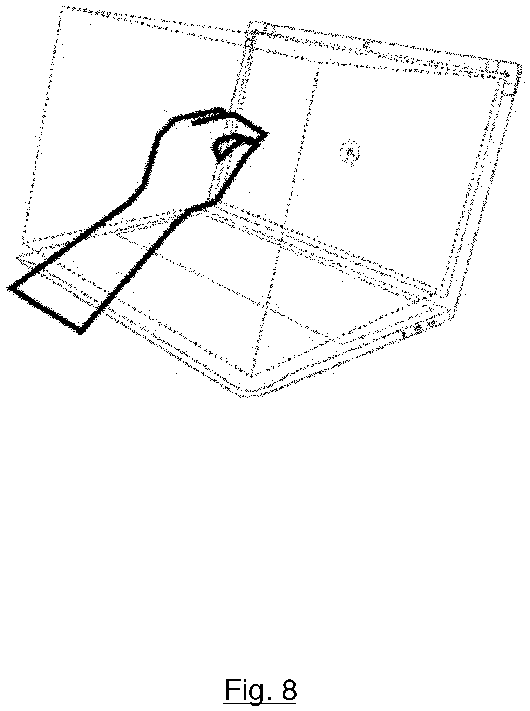

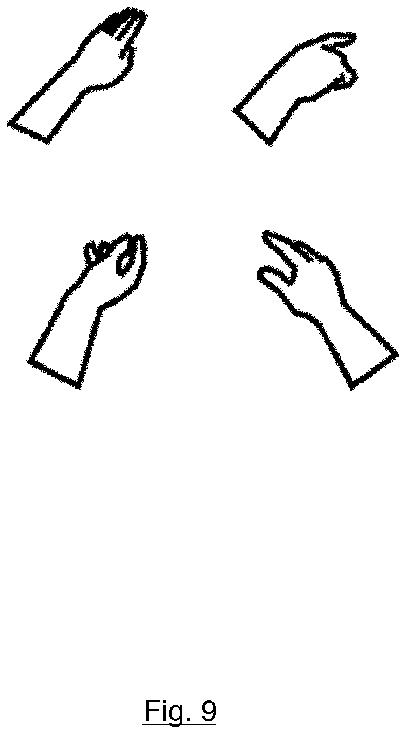

Fig. 4 illustrates a three-dimensional interaction space 402 in accordance with embodiments of the present disclosure as one example of an interaction space observed by the touchless gesture input system 110. It should be understood that the interaction space 402 is represented in Fig. 4 by a geometric body with a cube-like shape for illustration purposes, but that the interaction space 402 does not have to have the exact shape shown, and neither will it be a geometric body with sharp edges in reality. The interaction space may have different shapes, dimensions, directions and/or spatial extensions depending on the use case and/or hardware characteristics. For example, the interaction space may be arranged essentially above the user-facing surface of the base housing of the portable computer, or a part thereof, or may instead or in addition cover other areas, such as without limitation proximal to the portable computer (i.e., between the computer and the user) and/or next to one or two sides of the portable computer. By using touchless gesture control, the portable computer 100 can react in the most intuitive way to gestures performed by users. The applications are practically endless, including for example and without limitation touchless gesture control with free-hand gestures (see Fig. 5), touchless gesture control with free-hand gestures in combination with touch inputs, e.g., on the virtual control panel 304 (see Fig. 6), touchless gesture control while typing (see Fig. 7), and touchless gesture control with 3D gestures (see Fig. 8). The user may define one or more user-defined touchless input gestures, examples of which are illustrated in Fig. 9.

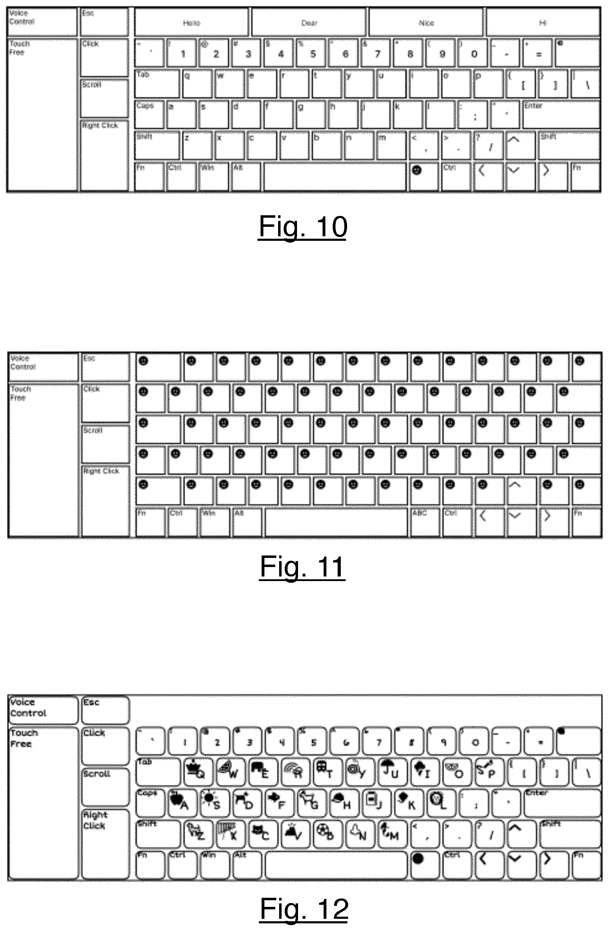

The combination of the touchscreen 106 instead of a physical computer keyboard and the touchless gesture input system 110 allows for unlocking the full virtualization of the human-machine interface of the portable computer 100. This in turn allows for providing sheer endless possibilities for applications running on the portable computer 100. Before some of these will be explained, exemplary keyboard layouts displayable on the display 108 will be described. It should be understood that the control panel 304 shown in Figs. 10-14 is optional.

Fig. 10 illustrates a keyboard layout with a virtual computer keyboard. Using touch inputs applied to the touchscreen 106, the user can input text into an application displayed on the display, similar to using a physical computer keyboard. An advantage of the virtual computer keyboard, however, is that its layout can easily be changed and adapted to the user's need, accommodating for different languages, as one example. Another example of an alternative keyboard layout is a layout for inputting emojis, as illustrated in Fig. 11.

Fig. 12 illustrates an application-specific layout with user-selectable affordances associated with contents of an educational application displayed on the display. In the illustrated example, the educational application is a reading learning application for children and thus small self-explanatory pictures are displayed on the keys associated with letters of the alphabet (such as an orange on the letter "O", a lion on the letter "L", and the like).

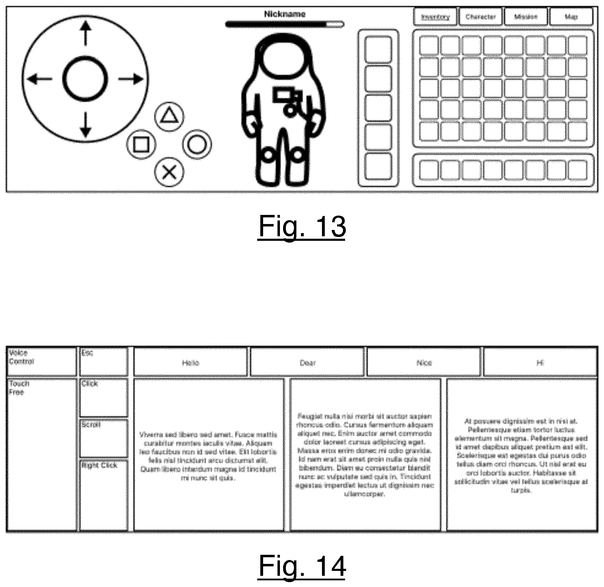

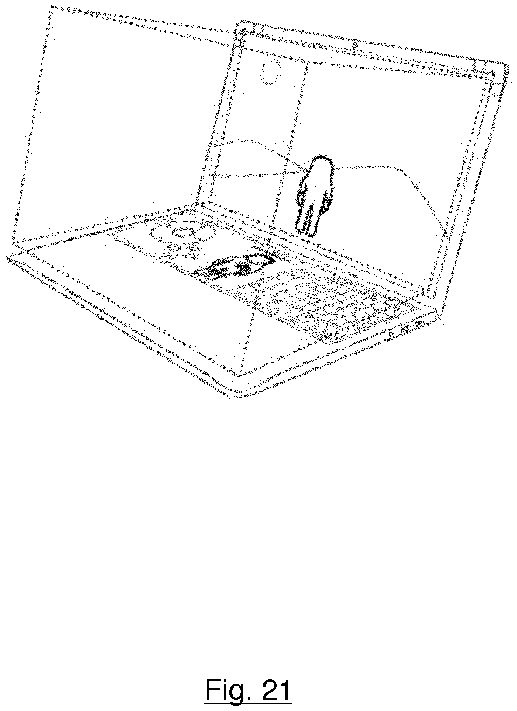

Fig. 13 illustrates an application-specific layout with user-selectable affordances associated with contents of a gaming application displayed on the display. In the illustrated example, a control panel is displayed on the left-hand side which comprises both a joystick-like control element and four function buttons. The real potential of the virtualization approach of the present disclosure becomes apparent, however, when looking at the center and right-hand portions of Fig. 13. As can be seen, a representation of the player avatar is displayed in the center of the application-specific layout indicating the health status of the player. The right-hand portion displays an inventory as commonly used in open world games, for instance. However, with a common computer, such an inventory would be displayed on the main display, taking space away from the actual game. Using the portable computer 100, such contents can be displayed on the touchscreen 106 instead. This not only affords more screen space for the actual application on the main display 108, but it is the interplay between application content displayed on the main display 108 and controls and/or application content displayed on the touchscreen 106 combined with touch input capabilities (on the touchscreen 106) and touchless gesture input capabilities (on the main display 108 using the touchless gesture input system 110) which unlocks a completely new way of using computers, which is not only limited to the illustrated gaming application, of course. The novel user interaction concept associated with gaming applications will be explained in more detail with reference to Fig. 21 further below.

Fig. 14 illustrates an application-specific layout with user-selectable affordances associated with contents of a business application, in particular a word processing application, displayed on the display. In the example, suggested text portions, which may have been generated by a large language model, are shown on the touchscreen 106. By applying a touch input to one of the displayed suggestions, the corresponding text portion may be inserted into the word processing application, preferably at a place where the user has previously moved the text input cursor using touchless gesture input.

Some exemplary applications of the virtualized human-machine interface according to embodiments of the present disclosure will now be described in more detail:

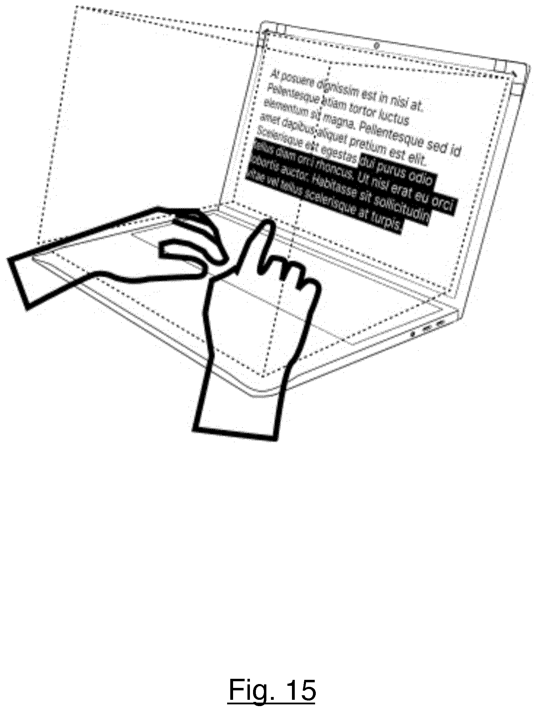

Fig. 15 illustrates an example use of the computer 100 according to an embodiment of the present disclosure for creating a slide presentation using a presentation application such as Microsoft PowerPoint. The main display 108 of the computer 100 displays a main screen of the presentation application. The touchscreen 106 of the computer 100 displays a virtual computer keyboard. The user can conveniently control the mouse pointer using touchless gesture input (in the illustrated example by pointing with the right index finger towards the display 108) and can quickly switch to a typing posture to input text into the presentation.

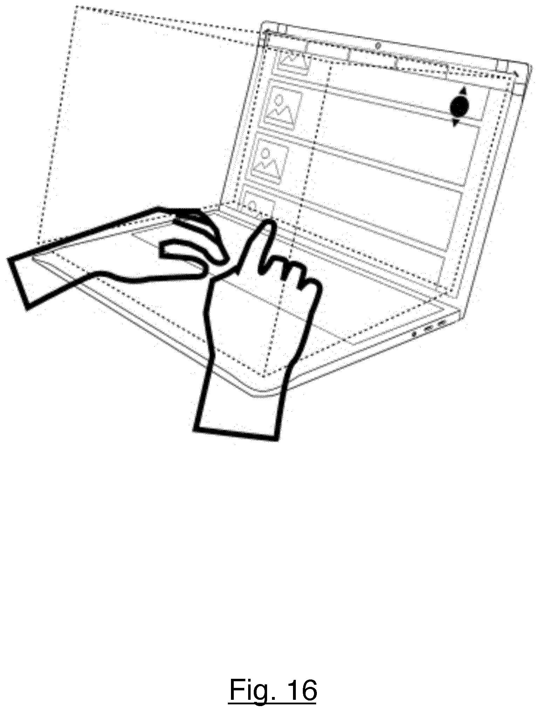

Fig. 16 illustrates an example use of the computer 100 according to an embodiment of the present disclosure for browsing Internet content. The main display 108 of the computer 100 displays a browser window with a website of a video platform, as one example of Internet content. The touchscreen 106 of the computer 100 displays a virtual computer keyboard. The user can conveniently control the mouse pointer or directly scroll through the displayed contents using touchless gesture inputs.

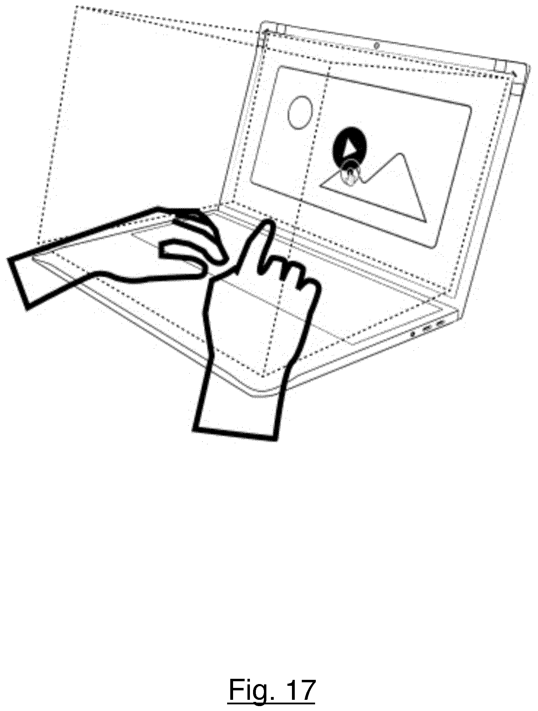

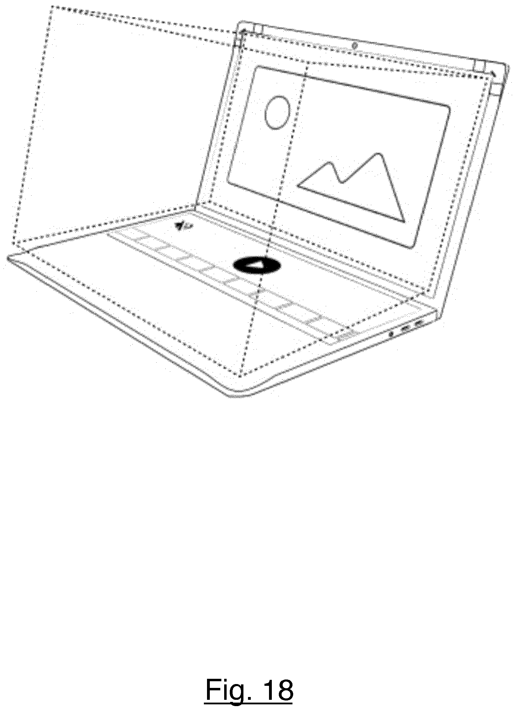

Fig. 17 illustrates an example use of the computer 100 according to an embodiment of the present disclosure for consuming video content. The main display 108 of the computer 100 displays a video. The touchscreen 106 of the computer 100 displays a virtual computer keyboard. The user can conveniently use touchless gesture inputs to pause, play, mute, navigate through the video, fast forward, rewind, and the like. Fig. 18 shows a variation of the example of Fig. 17 in which the touchscreen 106 displays one or more input elements associated with the video application to perform functions such as mute, volume control, play, pause, navigate, or the like.

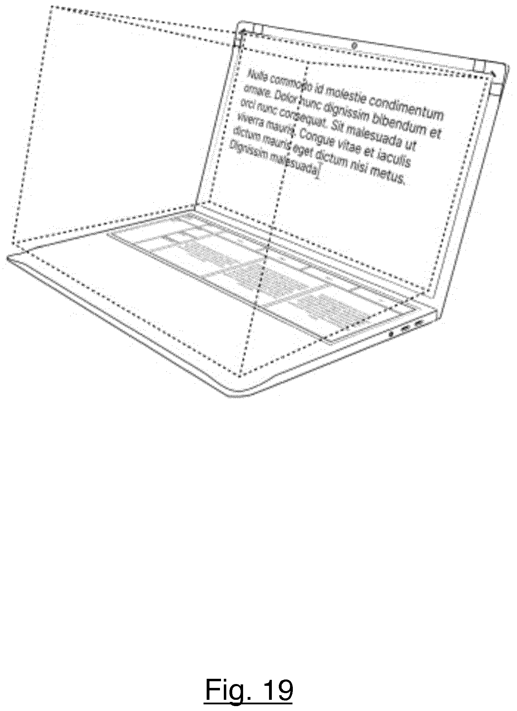

Fig. 19 illustrates an example use of the computer 100 according to an embodiment of the present disclosure for a text or word processing application. The main display 108 of the computer 100 displays a word processing application. The touchscreen 106 of the computer 100 displays suggested text portions, which may have been generated by a large language model, similar to the example shown in Fig. 14 described above. Fig. 19 also indicates an audio input means for inputting spoken language, which may be converted to text, such as by using a large language model. The user may also use touchless gesture inputs to manipulate the contents displayed on the main display 108, such as touchless gesture inputs for scrolling, zooming, navigating and selecting text, or the like. This way, a novel way of interacting with word processing applications may be provided which provides more efficient and natural ways of producing text or documents as with a conventional computer keyboard relying primarily on manual text input.

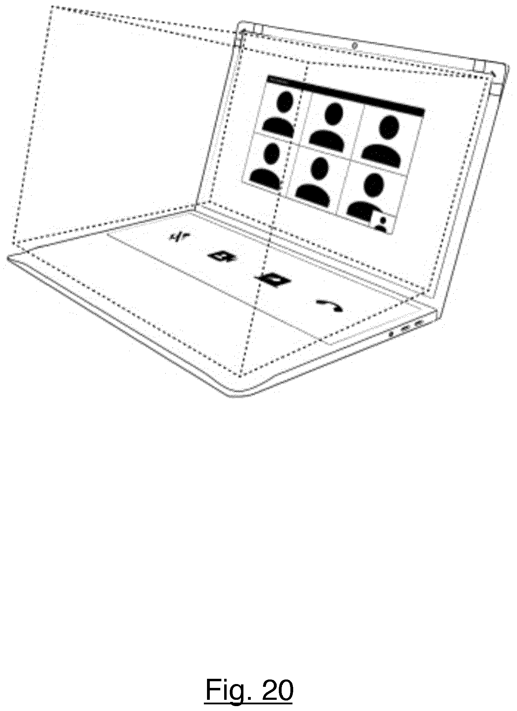

Fig. 20 illustrates an example use of the computer 100 according to an embodiment of the present disclosure for a video conference application. The main display 108 of the computer 100 displays a video conference application with an ongoing video meeting. The touchscreen 106 of the computer 100 displays presentation slides of a presentation and/or one or more supplementary control functions. Using touch inputs on the touchscreen 106, the user may control functions of the video conference application such as muting the microphone, sharing a presentation or other screen content, advancing from one slide to the next, choosing a particular presentation slide, and the like. Using touchless gesture inputs, the user may also control functions associated with the video meeting and/or presentation such as advancing from slide to slide using a touchless swipe gesture, highlighting a particular part of presented content using a touchless finger pointing gesture, and the like. It should be understood that the functions relating to a slide presentation are not limited to the depicted video meeting scenario but may also be provided in the context of other slide presentation scenarios.

Fig. 21 illustrates an example use of the computer 100 according to an embodiment of the present disclosure for a gaming application. The main display 108 of the computer 100 displays a gaming application with an ongoing computer game. The touchscreen 106 of the computer 100 displays an application-specific layout with user-selectable affordances associated with controls and/or contents of the gaming application, similar to Fig. 13 discussed above. The user may use touch inputs on the touchscreen 106 to control the movement of a game character or avatar through the virtual gaming world, e.g., using the left hand. The user may use touchless gesture inputs to control the looking or aiming direction of the game character or avatar, e.g., using the right hand or one or more fingers thereof. While pointing with an index finger to control the looking or aiming direction, the user may use other fingers of the same hand to access other contents of the gaming application displayed on the touchscreen 106, such as an inventory or the like.

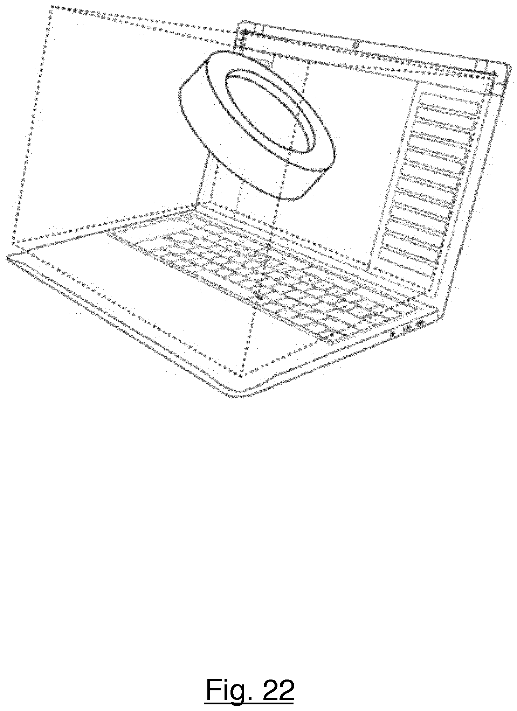

Fig. 22 illustrates an example use of the computer 100 according to an embodiment of the present disclosure for a 3D graphics application. The main display 108 of the computer 100 is in this case a three-dimensional display which displays a three-dimensional object in the graphics application. The touchscreen 106 of the computer 100 displays a virtual computer keyboard in the depicted example but may comprise any other practical layout for the given purpose. The user performs a touchless 3D gesture input for interacting with the 3D object displayed on the display 108.

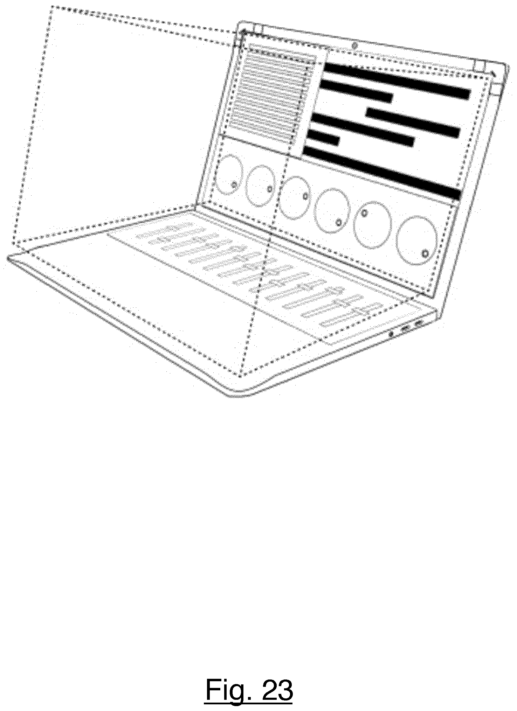

Fig. 23 illustrates an example use of the computer 100 according to an embodiment of the present disclosure for a video and/or audio application. The main display 108 of the computer 100 displays a graphical user interface of the video and/or audio application. The touchscreen 106 of the computer 100 displays an additional graphical user interface of the video and/or audio application. The user may use touchless gesture input to interact with the graphical user interface displayed on the main display 108 and may use touch inputs on the touchscreen 106 to interact with supplementary controls displayed there.

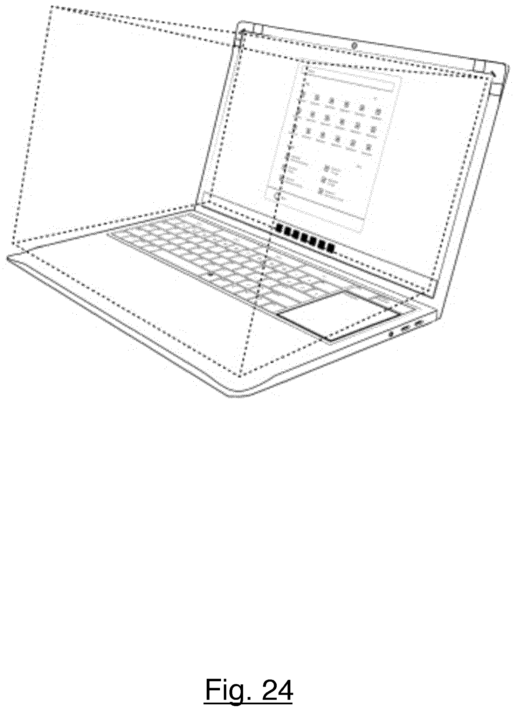

Fig. 24 illustrates an example use of the computer 100 according to an embodiment of the present disclosure with a user-customized touchscreen layout. The main display 108 of the computer 100 displays a graphical user interface of an operating system, but it should be understood that any application could be displayed. The touchscreen 106 of the computer 100 displays a user-customized touchscreen layout. In the illustrated example, the user has enhanced a virtual computer keyboard with supplementary input elements associated with user-specified shortcuts, which are arranged in a vertical row to the right of the virtual keyboard in this example. The contents and arrangement of these input elements is fully customizable.

Fig. 24 also illustrates a virtual touchpad displayed on the touchscreen 106. In the illustrated example, the virtual touchpad is arranged on the right-hand side of the touchscreen 106, allowing ergonomic access by the right hand of the user. The user may use the virtual touchpad, for example, to command more precise movements of a pointer displayed on the main display 108, possibly as a supplement to the touchless gesture input capabilities disclosed herein. It should be understood that the virtual touchpad may be provided also in other use cases beyond the user-customized touchscreen layout shown in Fig. 24.

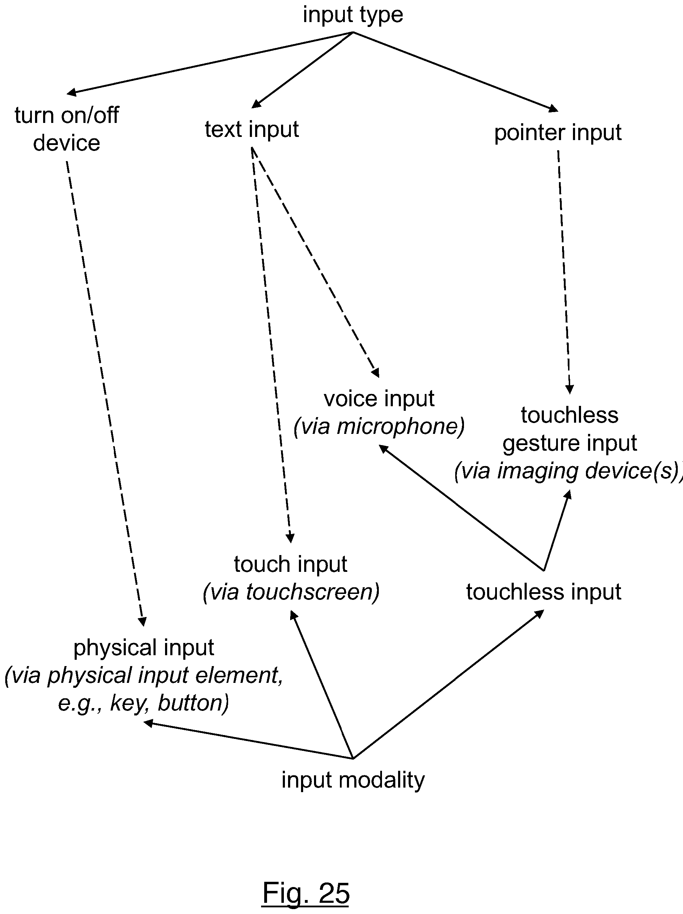

Fig. 25 illustrates an exemplary mapping of input types onto input modalities according to an embodiment of the present disclosure. In the illustrated example, the input types comprise turning on/off the device, text input and pointer input. It should be understood that only some of the mentioned input types as well as other input types, such as the various application-specific input types described herein and/or yet other input types, may be provided in embodiments of the present disclosure. In the illustrate example, the input modalities comprise physical input (such as via a physical input element like a key, button, or the like), touch input (such as via the touchscreen) and touchless input, the touchless input category comprising touchless gesture input (such as via one or more imaging devices or, more generally, one or more sensor devices) and voice input (such as via a microphone). It should be understood that only some of the mentioned input modalities as well as other input modalities may be provided in embodiments of the present disclosure. In the example of Fig. 25, the input type "pointer input" is provided through the input modality "touchless gesture input", the input type "text input" is provided through the input modalities "voice input" and "touch input", and the input type "turn on/off device" is provided through the input modality "physical input". It should be understood that various other configurations or mappings may be provided in embodiments of the present disclosure.

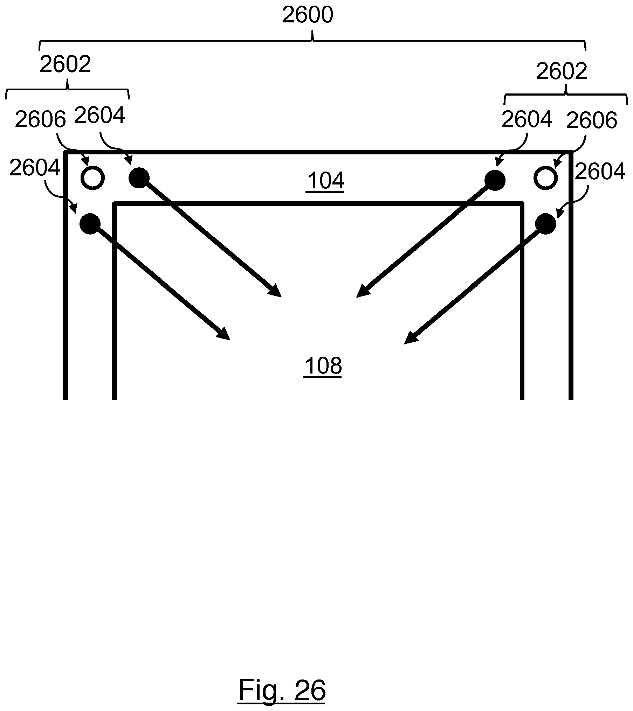

Figure 26 illustrates an exemplary hardware configuration of a sensing means 2600 of the touchless gesture input system 110 in an embodiment of the present disclosure. The sensing means 2600 comprises two sensor arrangements or arrays 2602. Each sensor array 2602 comprises a viewing direction which is depicted by arrows. As can be seen from the pointing direction of the arrows, the fields of view of the sensor arrays 2602 extend at least partly across the display 108 from a left side to a right side and/or vice versa with respect to an orientation of the display 108 during usage. In the illustrated embodiment, each sensor array 2602 comprises two sensor devices 2604 which may be infrared cameras or RGB-cameras and one projector 2606 which may be an infrared laser projector. The projector 2606 may project a pattern being capturable by the sensor devices 2604 and configured to support the sensor devices 2604 to capture sensor data, in particular depth information. In the illustrated embodiment, the projectors 2606 are respectively arranged in upper corners of the top cover 104 of the portable computer 100, in particular at a framing of the top cover 104. Accordingly, the sensor devices 2604 are respectively arranged essentially in said upper corners.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A portable computer (100) comprising:
a base housing (102) without a physical computer keyboard and comprising a touchscreen (106) arranged on a user-facing surface of the base housing (102);
a top cover (104) flexibly coupled to the base housing (102) and comprising a display (108) arranged on a user-facing surface of the top cover (104); and
a touchless gesture input system (110).

2. The portable computer (100) of claim 1, wherein the base housing (102) is a housing without a physical pointing device.

3. The portable computer (100) of any one of the preceding claims,
wherein the user-facing surface of the base housing (102) does not comprise any physical buttons; or
wherein the user-facing surface of the base housing (102) does not comprise any physical buttons except for a power button (202) and/or a mouse button assembly; or
wherein the user-facing surface of the base housing (102) does not comprise any physical buttons except for a power button (202) and/or a mouse button assembly and/or a function button assembly.

4. The portable computer (100) of any one of the preceding claims,
wherein the touchscreen (106) is arranged in at least a keyboard region (204) of the user-facing surface of the base housing (102); and/or
wherein the touchscreen (106) is arranged above a palmrest region (206) of the user-facing surface of the base housing (102); and/or
wherein the touchscreen (106) covers essentially the entire width of the user-facing surface of the base housing (102); and/or
wherein the touchscreen (106) covers essentially an upper half of the user-facing surface of the base housing (102); and/or
wherein the touchscreen (106) has a size suitable for displaying at least a virtual computer keyboard (302).

5. The portable computer (100) of any one of the preceding claims,
wherein the touchscreen (106) is configured to display a virtual control panel (304) comprising a plurality of user-selectable affordances (310, 312, 314, 316) associated with touchless gesture input;
wherein, optionally, the virtual control panel (304) is arranged at or near a left edge or a right edge of the touchscreen (106).

6. The portable computer (100) of claim 5,
wherein the plurality of user-selectable affordances (310, 312, 314, 316) associated with touchless gesture input comprises one or more of:
a touchless gesture input mode indication button (310);
a left click button (312);
a right click button (316);
a scroll button (314).

7. The portable computer (100) of claim 6,
wherein the virtual control panel (304) comprises:
an outermost row (306) reachable by a middle finger of a user; and
an inner row (308) reachable by an index finger of the user;
wherein the touchless gesture input mode indication button (310) is arranged in the outermost row (306);
wherein the left click button (312) is arranged at the top of the inner row (308);
wherein the right click button (316) is arranged at the bottom of the inner row (308);
wherein the scroll button (314) is arranged between the left click button (312) and the right click button (316).

8. The portable computer (100) of any one of the preceding claims, wherein the display is a touch-insensitive display; and/or
wherein the display is a display configured to display three-dimensional content, in particular a spatial reality display and/or a holographic display.

9. The portable computer (100) of any one of the preceding claims, wherein the portable computer (100) is configured to enter one of a plurality of touchless gesture input modes based at least in part on a position of at least one hand of the user relative to the portable computer (100);
wherein the plurality of touchless gesture input modes comprises one or more of:
a first mode in which at least part of a hand of the user, in particular at least one finger, is resting on the touchscreen (106), such as in a typing posture;
a second mode in which at least part of a hand of the user, in particular a palm or portion thereof, is resting on a palmrest region (206) of the user-facing surface of the base housing (102);
a third mode in which at least part of a hand of the user, in particular the entire hand, is arranged next to the portable computer (100);
a fourth mode in which a hand of the user is arranged near the display (108) without touching the portable computer (100);
a fifth mode in which at least part of a hand of the user, in particular at least one finger, is resting on a palmrest region (206) of the user-facing surface of the base housing (102).

10. The portable computer (100) of any one of the preceding claims, wherein the touchless gesture input system (110) is configured to determine a plurality of different touchless gesture inputs performed by a user in an interaction space (402), in particular a three-dimensional interaction space (402);
wherein the touchless gesture inputs are determined based at least in part on one or more of:
one or more fingers of the user;
one or both hands of the user;
one or more input objects held by the user;
wherein the touchless gesture inputs are further determined based at least in part on one or more touch inputs on the touchscreen (106).

11. The portable computer (100) of claim 10, wherein the determined touchless gesture inputs comprise one or more of:
a pointing gesture, wherein determining the pointing gesture causes a manipulation of a pointer displayed on the display;
one or more two-dimensional and/or three-dimensional gestures;
one or more user-defined gestures.

12. The portable computer (100) of any one of the preceding claims, wherein the touchscreen (106) is configured to display a plurality of touchscreen layouts comprising one or more of:
a keyboard layout comprising a virtual computer keyboard for inputting text into an application displayed on the display (108);
one or more application-specific layouts comprising user-selectable affordances associated with content of an application displayed on the display (108), wherein the application includes one of:
a word processing application;
a spreadsheet application;
a presentation application;
a gaming application;
an educational application;
a web browser application;
a video viewer application;
a video and/or audio editing application;
a programming environment application;
a musical instrument application;
a device control application for controlling a technical device such as an industrial machine, a robot, a vehicle, or a medical device;
one or more user-defined layouts;
a blank layout;
wherein, optionally, the portable computer (100) is configured to cause displaying a selected one of the plurality of touchscreen layouts based at least in part on a user selection and/or based at least in part on a predicted user intent.

13. The portable computer (100) of any one of the preceding claims,
wherein the touchless gesture input system (110) comprises sensing means (2600) configured to observe at least part of an interaction space, in particular at least part of the interaction space of any one of claims 10-12;
wherein the sensing means (2600) comprises at least a first and a second sensor arrangement (2602);
wherein the first and the second sensor arrangements (2602) are respectively arranged at or near opposing upper corners of the user-facing surface of the top cover (104).

14. A method of controlling the portable computer (100) of any one of claims 1-13, the method comprising at least the following steps:
receiving at least one user input, including at least one touch input on the touchscreen (106) and/or at least one touchless gesture input captured by the touchless gesture input system (110); and
generating at least one control command, including at least one control command to control a function of the portable computer (100) and/or at least one control command to cause manipulation of content displayed on the touchscreen (106) and/or at least one control command to cause manipulation of content displayed on the display (108).

15. A computer program or a computer-readable medium having stored thereon a computer program, the computer program comprising instructions which, when the program is executed by the portable computer (100) of any one of claims 1-13, cause the portable computer (100) to carry out the method of claim 14.
